# EUROPÄISCHE PATENTSCHRIFT

(11) **EP 2 191 922 B1**
(45) Veröffentlichungstag und Bekanntmachung des Hinweises auf die Patenterteilung: **05.01.2011**
(21) Anmeldenummer: 08020606.3
(22) Anmeldetag: 27.11.2008
(51) Int. Cl.: B22F 3/105, B29C 67/00

(54) **Träger- und Pulverauftragsvorrichtung für eine Anlage zur Herstellung von Werkstücken durch Beaufschlagen von Pulverschichten mit elektromagnetischer Strahlung oder Teilchenstrahlung**
Carrier and powder application device for a system to manufacture workpieces by applying powder layers with electromagnetic radiation or particle radiation
Dispositif d'application de poudre sur un support pour une installation de fabrication de pièces usinées en utilisant des couches de poudre à l'aide d'un rayonnement électromagnétique ou un rayonnement de particules

(43) Veröffentlichungstag der Anmeldung: 02.06.2010
(60) Teilanmeldung: 09012428.0
(73) Patentinhaber: MTT Technologies GmbH, 23556 Lübeck (DE)
(72) Erfinder: Zilian, Cersten, 56244 Vielbach (DE); Schöneborn, Henner, 23858 Reinfeld (DE)
(74) Vertreter: Schicker, Silvia

(56) Entgegenhaltungen:
- EP-A- 1 439 050
- EP-A- 1 674 192
- DE-A1-102004 041 633
- DE-A1-102005 056 260
- DE-A1-102006 023 484
- DE-A1-102007 029 052
- DE-C1- 19 813 742
- DE-U1- 9 400 364
- US-B1- 6 764 636

## Beschreibung

Die vorliegende Erfindung betrifft eine Träger- und Pulverauftragvorrichtung, die zum Einsatz in einer Anlage zur Herstellung von dreidimensionalen Werkstücken durch Beaufschlagen von Pulverschichten mit elektromagnetischer Strahlung oder Teilchenstrahlung vorgesehen ist. Ferner betrifft die Erfindung eine mit einer derartigen Pulverauftragvorrichtung ausgestattete Anlage zur Herstellung von Werkstücken durch Beaufschlagen von Pulverschichten mit elektromagnetischer Strahlung oder Teilchenstrahlung, insbesondere eine Laserschmelz- oder Lasersinteranlage.

Das selektive Laserschmelzen oder Lasersintern ist ein generatives Schichtbawerfahren, durch das pulverförmige, insbesondere metallische und/oder keramische Rohstoffe zu komplex geformten dreidimensionalen Werkstücken verarbeitet werden können. Hierzu wird eine Rohstoffpulverschicht auf einen Träger aufgebracht und in Abhängigkeit der gewünschten Geometrie des zu erstellenden Werkstücks ortselektiv mit Laserstrahlung beaufschlagt. Die in die Pulverschicht eindringende Laserstrahlung bewirkt eine Erwärmung und folglich eine Verschmelzung oder Versinterung der Rohstoffpulverpartikel. Anschließend werden sukzessiv weitere Rohstoffpulverschichten auf die bereits laserbehandelte Schicht auf dem Träger aufgebracht bis das Werkstück die gewünschte Form und Größe hat. Selektives Laserschmelzen oder Lasersintern kann insbesondere zur Herstellung von Prototypen, Werkzeugen, Ersatzteilen oder medizinischen Prothesen, wie zum Beispiel zahnärztlichen oder orthopädischen Prothesen anhand von CAD-Daten eingesetzt werden.

Eine aus der EP 1 793 979 A1 sowie der DE 10 2004 041 633 A1 bekannte Anlage zur Herstellung von Formkörpern aus pulverförmigen Rohstoffen durch selektives Laserschmelzen umfasst einen Prozessraum, in dem eine Mehrzahl von Trägern für die herzustellenden Formkörper angeordnet ist. Eine Pulverschicht-Präparierungseinrichtung umfasst einen Pulverreservoirhalter, der mittels eines Spindeltriebs über die Träger hin- und herbewegt werden kann. In dem Pulverreservoirhalter sind mehrere, den einzelnen Trägern zugeordnet Einstecköffnungen ausgebildet, die als Pulverreservoirs dienende Wechsel behälter aufnehmen. Auf ihrer den Trägern zugewandten Unterseite weisen die Wechsel behälter jeweils eine Pulverausgabeöffnung auf, durch die Pulver aus den Wechselbehältern auf die Träger aufgebracht werden kann. Ferner sind die Wechselbehälter jeweils mit Pulverabstreifelementen versehen, die dazu dienen, bei der Bewegung des Pulverreservoirhalters über die Träger die auf die Träger aufgebrachte Pulverschicht glatt zu streichen und auf eine gewünschte Höhe zu nivellieren.

Die EP 1 674 192 A1 betrifft ein Verfahren zur Herstellung eines Leichtbauelements aus Hohlkugeln. In einer ersten Ausführungsform des in der EP 1 674 192 A1 beschriebenen Verfahrens werden die Hohlkugeln mittels einer Lochmaske auf einem Trägerelement schichtweise abgelegt und durch Bestrahlen mit einem Laser fixiert. Nicht fixierte Hohlkugeln werden mittels einer Absaugeinrichtung nach oben abgesaugt, so dass sich Hohlräume und Vertiefungen in dem Leichtbauelement ergeben. In einer weiteren Ausführungsform des Verfahrens gemäß der EP 1674 192 A1 werden die Hohlkugeln mittels zweier Schlitzbleche in zwei Schichten auf einer durch zwei Förderwalzen kontinuierlich weitergeförderten Trägerplatte abgelegt.

Die DE 10 2007 029 052 A1 beschreibt ein Verfahren zum Herstellen eines Bauteils basierend auf dreidimensionalen Daten des Bauteils, bei dem durch eine Mehrzahl von Pulverzufuhrdüsen unterschiedliche Pulverarten auf eine Bauplattform bzw. eine bereits gebildete Bauteilschicht aufgebracht werden. Die auf die Bauplattform bzw. die bereits gebildete Bauteilschicht aufgebrachten Pulver werden durch Energiestrahlung aufgeschmolzen. Die Zufuhr von Pulver zu den Pulverzufuhrdüsen und damit auf die Bauplattform bzw. die bereits gebildete Bauteilschicht wird durch Absperreinrichtungen gesteuert, die die Pulverzufuhr zu den Pulverdüsen wahlweise freigeben oder unterbinden.

Die DE 10 2005 056 260 A1 offenbart ein Verfahren zum flächigen Auftragen von fließfähigem Material, bei dem mittels einer Walze Material aus einem Vorlagebehälter in einen Dosierschacht gefördert wird.

Die DE 198 13 742 C1, die DE 10 2006 023 484 A1, die DE 94 00 364 U1, die US 6,764,636 B1 und die EP 1 439 050 A1 beschreiben jeweils den Einsatz von feststehenden Glättungsschiebern oder Klingen zum Glätten von Pulveroberflächen.

Die Erfindung ist auf die Aufgabe gerichtet, eine Träger- und Pulverauftragvorrichtung für eine Anlage zur Herstellung von Werkstücken durch Beaufschlagen von Pulverschichten mit elektromagnetischer Strahlung oder Teilchenstrahlung bereitzustellen, die bei der Herstellung eines Werkstücks eine effiziente und kontrollierte Verarbeitung verschiedener Rohstoffpulver ermöglicht Ferner ist die Erfindung auf die Aufgabe gerichtet, eine mit einer derartigen Träger- und Pulverauftragvorrichtung ausgestattete Anlage zur Herstellung von Werkstücken durch Beaufschlagen von Pulverschichten mit elektromagnetischer Strahlung oder Teilchenstrahlung, insbesondere eine Laserschmelz- oder Lasersinteranlage bereitzustellen.

Diese Aufgabe wird durch eine Träger- und Pulverauftragvorrichtung mit den Merkmalen des Anspruchs 1 sowie eine Anlage zur Herstellung von Werkstücken durch Beaufschlagen von Pulverschichten mit elektromagnetischer Strahlung oder Teilchenstrahlung mit den Merkmalen des Anspruchs 10 gelöst.

Eine erfindungsgemäße Träger- und Pulverauftragvorrichtung zur Verwendung in einer Anlage zur Herstellung von Werkstücken durch Beaufschlagen von Pulverschichten mit elektromagnetischer Strahlung oder Teilchenstrahlung, insbesondere einer Laserschmelz- oder Lasersinteranlage umfasst einen Träger zur Aufnahme eines Rohstoffpulvers sowie eines durch ein generatives Schichtbauverfahren aus dem Rohstoffpulver hergestellten Werkstücks. Grundsätzlich kann der Träger ein starr fixierter Träger sein. Vorzugsweise ist der Träger jedoch in vertikaler Richtung verschiebbar ausgebildet, so dass der Träger mit zunehmender Bauhöhe des schichtweise aufgebauten Werkstücks in vertikaler Richtung nach unten bewegt werden kann. Ferner umfasst die Träger- und Pulverauftragvorrichtung eine Pulverzufuhröffnung, durch die in der Anlage zu verarbeitendes Rohstoffpulver in die Pulverauftragvorrichtung zuführbar ist. Das Rohstoffpulver kann ein Kunststoffpulver, ein keramisches Pulver, ein metallisches Pulver und/oder ein beliebiges anderes Pulver mit einer beliebigen geeigneten Korngröße bzw. Korngrößenverteilung sein. Vorzugsweise werden Pulver mit Korngrößen < 200 µm verarbeitet. Ferner umfasst die erfindungsgemäße Pulverauftragvorrichtung einen Pulverraum, der dazu dient, über die Pulverzufuhröffnung in die Pulverauftragvorrichtung zugeführtes und auf einen Träger aufzubringendes Rohstoffpulver aufzunehmen. Der Pulverraum kann so dimensioniert sein, dass er das gesamte zur Herstellung eines Werkstücks benötigte Rohstoffpulver aufnehmen kann. Alternativ dazu kann der Pulverraum jedoch auch kleiner ausgeführt und die Pulverzufuhröffnung mit einer entsprechenden Pulvernachführvorrichtung zur Nachführung von Pulver in den Pulverraum der Pulverauftragvorrichtung verbunden sein. Die Pulvernachführung kann, je nach Bedarf, kontinuierlich oder diskontinuierlich erfolgen.

Der Pulverraum der erfindungsgemäßen Träger- und Pulverauftragvorrichtung umfasst mindestens zwei voneinander trennbare Pulverkammern. Jede Pulverkammer ist mit einer Pulverauslassöffnung zur Abgabe von Rohstoffpulver aus der Pulverkammer auf den Träger der Anlage zur Herstellung von Werkstücken durch Beaufschlagen von Pulverschichten mit elektromagnetischer Strahlung oder Teilchenstrahlung versehen. Es versteht sich, dass der Pulverraum der erfindungsgemäßen Träger- und Pulverauftragvorrichtung in eine beliebige Anzahl von Pulverkammern unterteilt sein kann. Die Pulverkammern müssen jedoch derart gegeneinander abgedichtet sein, dass das Eindringen von Rohstoffpulver aus einer Pulverkammer in eine andere Pulverkammer sicher unterbunden werden kann. Die Pulverauslassöffnungen der Pulverkammern sind vorzugsweise im Bereich einer dem Träger zugewandten Unterseite der Pulverkammern angeordnet, so dass auch eine schwerkraftgetriebene Pulverabfuhr aus den Pulverkammern auf den Träger möglich ist. In den Pulverkammern der erfindungsgemäßen Träger- und Pulverauftragvorrichtung können auch unterschiedliche Rohstoffpulver aufgenommen werden. Dadurch wird es ermöglicht, bei der Herstellung eines Werkstücks durch selektives Beaufschlagen von Pulverschichten mit elektromagnetischer Strahlung oder Teilchenstrahlung, insbesondere Laserschmelzen oder Lasersintern verschiedene Rohstoffpulver zu verarbeiten.

Der Pulverraum der erfindungsgemäßen Träger- und Pulverauftragvorrichtung kann mehrere unabhängig voneinander ausgebildete Pulverkammern umfassen. Beispielsweise können die Pulverkammern in Modulbauweise ausgeführt und lösbar miteinander verbindbar sein. Die Träger- und Pulverauftragvorrichtung kann dann jeweils mit einer gewünschten Anzahl von Pulverkammern betrieben werden. Alternativ dazu kann die erfindungsgemäße Träger- und Pulverauftragvorrichtung jedoch auch einen Pulverraum umfassen, in dem mehrere, beispielsweise zwei, mittels einer Trennwand voneinander getrennte Pulverkammern vorgesehen sind. Die Träger- und Pulverauftragvorrichtung kann dann verhältnismäßig kompakt und leichtgewichtig gestaltet werden. Die Trennwand muss sich insbesondere in vertikaler Richtung nicht durch den gesamten Pulverraum der Träger- und Pulverauftragvorrichtung erstrecken. Stattdessen muss die Trennwand lediglich so gestaltet sein, dass sie das Eindringen von Pulver aus einer Pulverkammer in eine andere Pulverkammer unterbindet.

Die Träger- und Pulverauftragvorrichtung kann insbesondere dann, wenn der Pulverraum durch mittels einer Trennwand voneinander getrennte Pulverkammern gebildet wird, lediglich eine Pulverzufuhröffnung aufweisen, durch die Rohstoffpulver in die Pulverkammern des Pulverraums zugeführt werden kann. Alternativ dazu ist es jedoch auch denkbar, mehrere Pulverzufuhröffnungen vorzusehen, die jeweils den voneinander getrennten Pulverkammern zugeordnet sind und die selektive Zufuhr von Rohstoffpulver in diese Pulverkammern ermöglichen. Eine derartige Ausgestaltung der erfindungsgemäßen Träger- und Pulverauftragvorrichtung ist dann vorteilhaft, wenn eine besonders saubere Trennung der mit Hilfe der Pulverauftragvorrichtung verarbeiteten Rohstoffpulver gewünscht oder erforderlich ist.

Im Betrieb der erfindungsgemäßen Träger- und Pulverauftragvorrichtung, d.h. bei einem Einsatz der Träger- und Pulverauftragvorrichtung in einer Anlage zur Herstellung von Werkstücken durch Beaufschlagen von Pulverschichten mit elektromagnetischer Strahlung oder Teilchenstrahlung, kann die Pulverauftragvorrichtung von einer beispielsweise in Form eines Spindeltriebs oder dergleichen ausgebildeten Antriebseinrichtung linear über den Träger hin- und herbewegt werden, um auf die Oberfläche des Trägers bzw. eines auf dem Träger angeordneten Werkstücks Rohstoffpulverschichten aufzubringen, die anschließend zum schichtweisen Aufbau des Werkstücks ortselektiv mit elektromagnetischer Strahlung oder Teilchenstrahlung, insbesondere Laserstrahlung beaufschlagt werden können. Zur Steuerung des Rohstoffpulverschichtaufbaus auf dem Träger ist den Pulverkammern der Pulverauftragvorrichtung vorzugsweise jeweils eine Einrichtung zur Steuerung der Pulverabfuhr durch die Pulverauslassöffnungen der Pulverkammern zugeordnet. Vorzugsweise ist für jede Pulverkammer der Pulverauftragvorrichtung eine derartige Steuereinrichtung vorgesehen. Die Pulverauftragvorrichtung ermöglicht dann eine selektive Aufbringung der verschiedenen Rohstoffpulver auf den Träger.

Die Einrichtung zur Steuerung der Pulverabfuhr durch die Pulverauslassöffnung der Pulverkammer kann eine einen Auslassquerschnitt der Pulverauslassöffnung steuernde Verschlussvorrichtung und/oder eine Fördereinrichtung zur Förderung von in der Pulverkammer aufgenommenem Rohstoffpulver in Richtung der Pulverauslassöffnung umfassen. Die Einrichtung zur Steuerung der Pulverabfuhr durch die Pulverauslassöffnung der Pulverkammer ist vorzugsweise so gestaltet, dass sie eine Dosierung des über die Pulverauslassöffnung aus der Pulverkammer abgegebenen Rohstoffpulvers ermöglicht. Insbesondere kann die Einrichtung zur Steuerung der Pulverabfuhr durch die Pulverauslassöffnung der Pulverkammer dazu eingerichtet sein, den Massenstrom des über die Pulverauslassöffnung aus der Pulverkammer abgegebenen Rohstoffpulvers stufenweise oder stufenlos zu steuern.

Erfindungsgemäß wird die Einrichtung zur Steuerung der Pulverabfuhr durch die Pulverauslassöffnung der Pulverkammer durch eine Förderwelle gebildet werden, die im Betrieb Rohstoffpulver aus der Pulverkammer in Richtung der Pulverauslassöffnung und durch die Pulverauslassöffnung auf den Träger der Anlage zur Herstellung von Werkstücken durch Beaufschlagen von Pulverschichten mit elektromagnetischer Strahlung oder Teilchenstrahlung fördert. Die Förderwelle ist vorzugsweise so positioniert, dass sie in einem Ruhezustand, d.h. in einem nicht angetriebenen Zustand, die Pulverauslassöffnung der Pulverkammer verschließt. Die Förderwelle kann mittels einer geeigneten Antriebseinrichtung in stets der gleichen Drehrichtung oder in wechselnden Drehrichtungen angetrieben werden. Vorzugsweise ist die Position der Pulverauslassöffnung relativ zur Position der Förderwelle in Abhängigkeit der gewünschten Antriebsdrehrichtung der Förderwelle gewählt. Wenn die Pulverauftragvorrichtung mehrere Förderwellen umfasst, können alle Förderwellen in der gleichen Drehrichtung angetrieben werden. Alternativ dazu ist es jedoch auch möglich, einen Teil der Förderwellen in einer Drehrichtung und einen Teil der Förderwellen in einer entgegengesetzten Drehrichtung anzutreiben.

Im Betrieb der erfindungsgemäßen Träger- und Pulverauftragvorrichtung können die Einrichtungen zur Steuerung der Pulverabfuhr durch die Pulverauslassöffnungen der Pulverkammern von einer elektronischen Steuereinheit in Abhängigkeit der gewünschten Struktur des durch Beaufschlagen von Pulverschichten mit elektromagnetischer Strahlung oder Teilchenstrahlung, insbesondere Laserschmelzen oder Lasersintern herzustellenden Werkstücks gesteuert werden. Beispielsweise können die Einrichtungen zur Steuerung der Pulverabfuhr durch die Pulverauslassöffnungen der Pulverkammern so gesteuert werden, dass nacheinander Schichten aus verschiedenen Rohstoffpulvern auf den Träger bzw. eine bereits erzeugte Werkstückschicht aufgebracht werden. Zusätzlich oder alternativ dazu ist auch eine ortselektive Steuerung der Einrichtungen zur Steuerung der Pulverabfuhr durch die Pulverauslassöffnungen der Pulverkammern denkbar, d.h. die Einrichtungen zur Steuerung der Pulverabfuhr durch die Pulverauslassöffnungen der Pulverkammern können so gesteuert werden, dass verschiedene Bereiche des Trägers der Anlage zur Herstellung von Werkstücken durch Beaufschlagen von Pulverschichten mit elektromagnetischer Strahlung oder Teilchenstrahlung bzw. der bereits erzeugten Werkstückschicht mit einer Schicht aus verschiedenen Rohstoffpulvern bedeckt werden.

Die erfindungsgemäße Träger- und Pulverauftragvorrichtung umfasst vorzugsweise ferner einen Glättungsschieber, der derart relativ zu einer Pulverauslassöffnung einer Pulverkammer positionierbar ist, dass er im Betrieb der Pulverauftragvorrichtung, d.h. wenn die Pulverauftragvorrichtung über den Träger bewegt wird, über eine durch die Pulverauslassöffnung auf den Träger aufgebrachte Rohstoffpulverschicht streicht, um die Rohstoffpulverschicht zu glätten und auf eine gewünschte Höhe zu nivellieren. Mit anderen Worten, der Glättungsschieber ist vorzugsweise derart relativ zu einer Pulverauslassöffnung einer Pulverkammer positionierbar, dass er bezogen auf eine Bewegungsrichtung der Pulverauftragvorrichtung im Betrieb hinter der Pulverauslassöffnung angeordnet ist. Dadurch kann der Glättungsschieber über die Rohstoffpulverschicht geführt werden, die durch die Pulverauslassöffnung auf den Träger aufgebracht wird.

Bei entsprechender Positionierung des Glättungsschiebers und entsprechendem Betrieb der Pulverauftragvorrichtung kann es ausreichen, die Pulverauftragvorrichtung mit lediglich einem Glättungsschieber zu versehen. Beispielsweise kann der Glättungsschieber hinter allen Pulverauslassöffnungen der Pulverauftragvorrichtung positionierbar sein, wenn die Pulverauftragvorrichtung linear in einer ersten Richtung über den Träger bewegt wird. Da der Glättungsschieber dann bei einer Bewegung der Pulverauftragvorrichtung in einer der ersten Richtung entgegengesetzten zweiten Richtung zwangsläufig lediglich vor den Pulverauslassöffnungen positioniert werden kann, ist es dann jedoch erforderlich, die Pulverauslassöffnungen der Pulverauftragvorrichtung bei der Bewegung der Pulverauftragvorrichtung in der zweiten Richtung zu verschließen, d.h. die Bewegung der Pulverauftragvorrichtung in der zweiten Richtung als "Leerfahrt" vorzusehen. Eine derartige Ausgestaltung und ein derartiger Betrieb der erfindungsgemäßen Träger- und Pulverauftragvorrichtung ist dann sinnvoll, wenn die Träger- und Pulverauftragvorrichtung möglichst einfach gestaltet sein soll und die zur Werkstückherstellung erforderlichen Zykluszeiten von lediglich untergeordneter Bedeutung sind.

Ein Pulverauftragvorrichtung, die ohne "Leerfahren" betrieben werden kann, umfasst eine Pulverzufuhröffnung, einen Pulverraum zur Aufnahme von auf einen Träger aufzubringendem Rohstoffpulver sowie einen Pulverraum mit mindestens einer Pulverkammer. Wenn der Pulverraum lediglich eine Pulverkammer umfasst, ist die Pulverkammer mit zwei voneinander getrennten Pulverauslassöffnungen zur Abgabe von Rohstoffpulver aus der Pulverkammer versehen und ein Glättungsschieber zwischen den beiden Pulverauslassöffnungen angeordnet. Dadurch ist der Glättungsschieber bezogen auf eine Bewegungsrichtung der Pulverauftragvorrichtung im Betrieb stets hinter einer Pulverauslassöffnung angeordnet und kann eine über diese Pulverauslassöffnung auf den Träger aufgebrachte Rohstoffpulverschicht glätten. Jeder Pulverauslassöffnung der Pulverkammer kann eine einen Auslassquerschnitt der Pulverauslassöffnung steuernde Verschlussvorrichtung und/oder eine beispielsweise in Form einer Förderwelle ausgebildete Fördereinrichtung zur Förderung von in der Pulverkammer aufgenommenem Rohstoffpulver in Richtung der Pulverauslassöffnung umfassen.

Eine für einen Betrieb ohne "Leerfahrten" geeignete Pulverauftragvorrichtung muss somit nicht zwingend mit mindestens zwei voneinander getrennten Pulverkammern versehen sein und kann unabhängig von diesem Merkmal beansprucht werden. Eine erfindungsgemäße Pulverauftragvorrichtung mit voneinander getrennten Pulverkammem ist jedoch ebenfalls ohne "Leerfahrten" betreibbar, wenn die Pulverauftragvorrichtung beispielsweise zwei Pulverkammern umfasst, die Pulverkammern mit dem gleichen Pulver gefüllt sind und ein Glättungsschieber zwischen den Pulverauslassöffnungen der beiden Pulverkammern angeordnet ist.

Alternativ dazu kann die erfindungsgemäße Träger- und Pulverauftragvorrichtung auch einen ersten und einen zweiten Glättungsschieber umfassen, die derart relativ zu den Pulverauslassöffnungen der Pulverkammern positionierbar sind, dass im Betrieb der Pulverauftragvorrichtung, wenn die Pulverauftragvorrichtung über den Träger bewegt wird, einer der Glättungsschieber über eine durch mindestens eine der Pulverauslassöffnungen auf den Träger aufgebrachte Rohstoffpulverschicht streicht, um die Rohstoffpulverschicht zu glätten. Mit anderen Worten, bezogen auf eine Bewegungsrichtung der Pulverauftragvorrichtung im Betrieb ist stets ein Glättungsschieber lediglich vor den Pulverauslassöffnungen positionierbar. Der andere Glättungsschieber kann jedoch hinter den Pulverauslassöffnungen positioniert werden und über die durch die Pulverauslassöffnungen auf den Träger aufgebrachte Rohstoffpulverschicht geführt werden. Bei einer derartigen Ausgestaltung der Pulverauftragvorrichtung können "Leerfahrten" vermieden werden.

Insbesondere dann, wenn Verunreinigungen der verarbeiteten Rohstoffpulver vermieden werden sollen, ist es vorteilhaft, wenn jeder Pulverauslassöffnung einer Pulverkammer ein separater Glättungsschieber zugeordnet ist, der derart relativ zu der Pulverauslassöffnung positionierbar ist, dass er im Betrieb der Pulverauftragvorrichtung, wenn die Pulverauftragvorrichtung über den Träger bewegt wird, über eine durch die Pulverauslassöffnung auf den Träger aufgebrachte Rohstoffpulverschicht streicht, um die Rohstoffpulverschicht zu glätten. Mit anderen Worten, der Glättungsschieber ist vorzugsweise derart relativ zu der Pulverauslassöffnung positionierbar, dass er bezogen auf eine Bewegungsrichtung der Pulverauftragvorrichtung im Betrieb hinter der Pulverauslassöffnung angeordnet ist. Wiederum kann es bei entsprechendem Betrieb der Pulverauftragvorrichtung ausreichen, für jede Pulverauslassöffnung lediglich einen Glättungsschieber vorzusehen, der bei einer Bewegung der Pulverauftragvorrichtung in einer ersten Richtung bezogen auf die Bewegungsrichtung der Pulverauftragvorrichtung hinter der Pulverauslassöffnung, bei einer Bewegung der Pulverauftragvorrichtung in einer der ersten Richtung entgegengesetzten zweiten Richtung jedoch lediglich vor der Pulverauslassöffnung positionierbar ist. Die Bewegung der Pulverauftragvorrichtung in der zweiten Richtung als dann wiederum als "Leerfahrt" vorzusehen.

Alternativ dazu kann jeder Pulverauslassöffnung einer Pulverkammer ein erster und ein zweiter Glättungsschieber zugeordnet sein, die derart relativ zu der Pulverauslassöffnung positionierbar sind, dass im Betrieb der Pulverauftragvorrichtung, wenn die Pulverauftragvorrichtung über den Träger bewegt wird, einer der Glättungsschieber über eine durch die Pulverauslassöffnung auf den Träger aufgebrachte Rohstoffpulverschicht streicht, um die Rohstoffpulverschicht zu glätten. Bei dieser Ausgestaltung der erfindungsgemäßen Träger- und Pulverauftragvorrichtung ist stets ein Glättungsschieber bezogen auf eine Bewegungsrichtung der Pulverauftragvorrichtung im Betrieb hinter der Pulverauslassöffnung positionierbar und kann über die durch die Pulverauslassöffnung auf den Träger aufgebrachte Rohstoffpulverschicht geführt werden. Dies ermöglicht die Vermeidung von "Leerfahrten.

Ein oder alle Glättungsschieber der erfindungsgemäßen Träger- und Pulverauftragvorrichtung kann/können vertikal zwischen einer Ruhestellung und einer Betriebsstellung verschiebbar sein. In seiner Ruhestellung hat ein Glättungsschieber vorzugsweise keinen Kontakt mit einer von der Pulverauftragvorrichtung erzeugten, d.h. auf den Träger aufgebrachten Rohstoffpulveroberfläche. In seiner Betriebsstellung wird der Glättungsschieber dagegen über die von der Pulverauftragvorrichtung erzeugte, d.h. die auf den Träger aufgebrachte Rohstoffpulveroberfläche geführt, um die Rohstoffpulveroberfläche glatt zu streichen und auf eine gewünschte Höhe zu nivellieren. Zwischen einer Ruhestellung und einer Betriebsstellung verschiebbare Glättungsschieber haben den Vorteil, dass sie dann, wenn sie nicht benötigt werden, den Betrieb der Pulverauftragvorrichtung nicht stören. Die vertikale Verschiebung des Glättungsschiebers kann manuell oder automatisch, beispielsweise durch eine elektronische Steuereinheit gesteuert erfolgen.

Ferner kann die erfindungsgemäße Träger- und Pulverauftragvorrichtung einen oder mehrere Glättungsschieber umfassen, der/die horizontal zwischen einer ersten und einer zweiten Stellung verschiebbar ist/sind. Der Glättungsschieber ist dann im Betrieb der Pulverauftragvorrichtung, wenn die Pulverauftragvorrichtung in entgegengesetzte Richtungen über den Träger hin- und herbewegt wird, stets derart relativ zu einer Pulverauslassöffnung einer Pulverkammer positionierbar, dass er über eine durch die Pulverauslassöffnung auf den Träger aufgebrachte Rohstoffpulverschicht streicht, um die Rohstoffpulverschicht zu glätten. Mit anderen Worten, der Glättungsschiebe ist derart horizontal verschiebbar, dass er im Betrieb der Pulverauftragvorrichtung bezogen auf eine Bewegungsrichtung der Pulverauftragvorrichtung stets hinter der Pulverauslassöffnung der Pulverkammer positioniert werden kann. Ein horizontal verschiebbarer Glättungsschieber kann nur horizontal oder horizontal und vertikal verschiebbar ausgebildet sein. Die horizontale Verschiebung eines Glättungsschiebers kann manuell oder automatisch, beispielsweise durch eine elektronische Steuereinheit gesteuert erfolgen.

Wenn jeder Pulverauslassöffnung der Pulverauftragvorrichtung ein Glättungsschieber zugeordnet ist, kann ein Teil der Glättungsschieber oder alle Glättungsschieber horizontal verschiebbar ausgebildet sein. Ferner ist es denkbar, die erfindungsgemäße Träger- und Pulverauftragvorrichtung mit nur einem Glättungsschieber zu versehen, der horizontal zwischen einer ersten Stellung, in der der Glättungsschieber bezogen auf eine Bewegungsrichtung der Pulverauftragvorrichtung im Betrieb hinter allen Pulverauslassöffnungen angeordnet ist, und einer zweiten Stellung, in der der Glättungsschieber bezogen auf eine entgegengesetzte Bewegungsrichtung der Pulverauftragvorrichtung im Betrieb hinter allen Pulverauslassöffnungen angeordnet ist, verschiebbar ist. Schließlich ist es denkbar, einen Glättungsschieber der Pulverauftragvorrichtung derart horizontal verschiebbar auszubilden, dass der Glättungsschieber in einer ersten Stellung bezogen auf eine Bewegungsrichtung der Pulverauftragvorrichtung im Betrieb hinter einer ersten Pulverauslassöffnung einer ersten Pulverkammer angeordnet ist, und in einer zweiten Stellung bezogen auf eine Bewegungsrichtung der Pulverauftragvorrichtung im Betrieb hinter einer zweiten Pulverauslassöffnung einer zweiten Pulverkammer angeordnet ist.

Ein horizontal oder vertikal verschiebbarer Glättungsschieber der erfindungsgemäßen Träger- und Pulverauftragvorrichtung kann mit einer Einrichtung zur Steuerung der Pulverabfuhr durch eine Pulverauslassöffnung einer Pulverkammer gekoppelt sein, die die Pulverauslassöffnung der Pulverkammer in Abhängigkeit einer Stellung des Glättungsschiebers verschließt oder freigibt. Beispielsweise können der Glättungsschieber und die Einrichtung zur Steuerung der Pulverabfuhr durch eine Pulverauslassöffnung einer Pulverkammer derart gekoppelt sein, dass die Einrichtung zur Steuerung der Pulverabfuhr durch eine Pulverauslassöffnung einer Pulverkammer die Pulverauslassöffnung verschließt, wenn sich der Glättungsschieber in seiner Ruhestellung befindet. In ähnlicher Weise können der Glättungsschieber und die Einrichtung zur Steuerung der Pulverabfuhr durch eine Pulverauslassöffnung einer Pulverkammer derart gekoppelt sein, dass die Einrichtung zur Steuerung der Pulverabfuhr durch eine Pulverauslassöffnung einer Pulverkammer die Pulverauslassöffnung verschließt, wenn der Glättungsschieber bezogen auf eine Bewegungsrichtung der Pulverauftragvorrichtung im Betrieb lediglich vor der Pulverauslassöffnung angeordnet ist.

Die Steuerung eines horizontal und/oder vertikal verschiebbaren Glättungsschiebers kann ebenso wie die Steuerung der Einrichtung zur Steuerung der Pulverabfuhr durch eine Pulverauslassöffnung einer Pulverkammer von einer elektronischen Steuereinheit übernommen werden. Diese elektronische Steuereinheit kann eine ausschließlich der Pulverauftragvorrichtung zugeordnete elektronische Steuereinheit sein. Alternativ dazu können die im Betrieb der Pulverauftragvorrichtung erforderlichen Steuerfunktionen auch von einer übergeordneten Steuereinheit der Anlage zur Herstellung von Werkstücken durch Beaufschlagen von Pulverschichten mit elektromagnetischer Strahlung oder Teilchenstrahlung übernommen werden. Vorzugsweise steuert die elektronische Steuereinheit den Betrieb der erfindungsgemäßen Pulverauftragvorrichtung in Abhängigkeit von CAD-Daten des durch Beaufschlagen von Pulverschichten mit elektromagnetischer Strahlung oder Teilchenstrahlung, insbesondere Laserschmelzen oder Lasersintern herzustellenden Werkstücks.

Eine erfindungsgemäße Anlage zur Herstellung von Werkstücken durch Beaufschlagen von Pulverschichten mit elektromagnetischer Strahlung oder Teilchenstrahlung umfasst eine Bestrahlungseinrichtung zur selektiven Beaufschlagung einer auf einem Träger aufgebrachten Rohstoffpulverschicht mit elektromagnetischer Strahlung oder Teilchenstrahlung, insbesondere Laserstrahlung. Die Bestrahlungseinrichtung umfasst vorzugsweise einen fokussierten Laser. Ein Strahl der Bestrahlungseinrichtung wird über die auf den Träger aufgebrachte Rohstoffpulverschicht geführt, so dass die auf den Träger aufgebrachte Rohstoffpulverschicht ortselektiv mit elektromagnetischer Strahlung oder Teilchenstrahlung beaufschlagt wird. Der durch die Beaufschlagung mit elektromagnetischer Strahlung oder Teilchenstrahlung verursachte Wärmeeintrag in die Rohstoffpulverschicht bewirkt, dass die einzelnen Partikel des Rohstoffpulvers in der Rohstoffpulverschicht miteinander verschmelzen bzw. versintern und dadurch ein schichtweise Werkstückaufbau erfolgt. Eine Träger- und Pulverauftragvorrichtung der erfindungsgemäßen Anlage zur Herstellung von Werkstücken durch Beaufschlagen von Pulverschichten mit elektromagnetischer Strahlung oder Teilchenstrahlung ist eine oben beschriebene erfindungsgemäße Träger- und Pulverauftragvorrichtung.

Bevorzugte Ausführungsformen der Erfindung werden nun anhand der beigefügten, schematischen Zeichnungen näher erläutert, von denen
- Figur 1: eine Pulverauftragvorrichtung mit vier Pulverkammern zeigt,
- Figur 2: eine Pulverauftragvorrichtung mit zwei Pulverkammern und einem vertikal verschiebbaren Glättungsschieber zeigt,
- Figur 3: eine Pulverauftragvorrichtung mit zwei Pulverkammern und zwei vertikal verschiebbaren Glättungsschiebern zeigt, und
- Figur 4: eine Pulverauftragvorrichtung mit zwei Pulverkammern und vier vertikal verschiebbaren Glättungsschiebern zeigt,
- Figur 5: eine Pulverauftragvorrichtung mit zwei Pulverkammern und einem sowohl vertikal als auch horizontal verschiebbaren Glättungsschieber zeigt,
- Figur 6: eine Pulverauftragvorrichtung mit zwei Pulverkammern und zwei horizontal sowie vertikal verschiebbaren Glättungsschiebern zeigt.

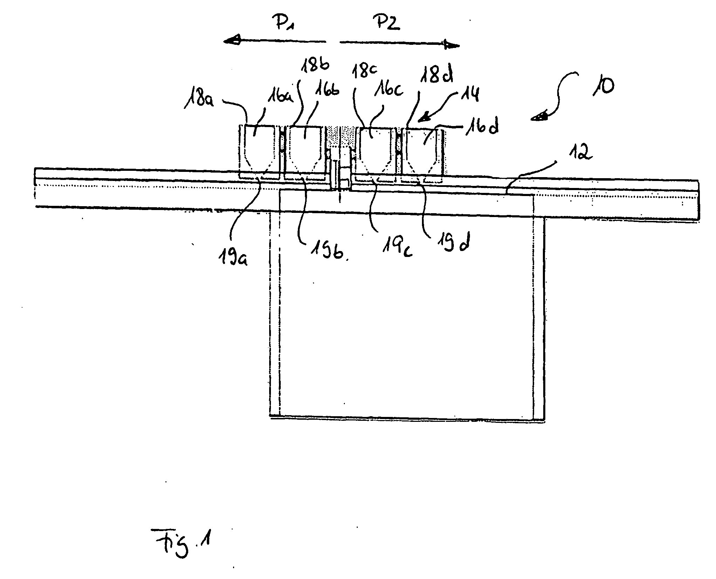

Fig. 1 zeigt eine erste Ausführungsform einer Pulverauftragvorrichtung 10, die zur Verwendung in einer Anlage zur Herstellung von Werkstücken durch Beaufschlagen von Pulverschichten mit elektromagnetischer Strahlung oder Teilchenstrahlung, insbesondere einer Laserschmelz- oder Lasersinteranlage vorgesehen ist. Die Pulverauftragvorrichtung 10 ist mittels einer nicht näher veranschaulichten Antriebseinrichtung, die beispielsweise in Form eines Spindeltriebs oder dergleichen ausgebildet sein kann, wie durch die Pfeile P1 und P2 angedeutet, linear über eine Oberfläche eines Trägers 12 hin- und herbewegbar. Die in Fig. 1 gezeigte Pulverauftragvorrichtung umfasst einen Pulverraum 14 zur Aufnahme von auf die Oberfläche des Trägers 12 aufzubringendem Rohstoffpulver, der durch vier quaderförmige separat voneinander ausgebildete Pulverkammern 16a bis 16d gebildet wird. Die Pulverkammern 16a bis 16d sind lösbar miteinander verbunden, so dass die Pulverauftragvorrichtung 10 mit einer beliebigen Anzahl von Pulverkammern 16a bis 16d versehen werden kann. Jeder Pulverkammer 16a bis 16d kann über eine entsprechende Pulverzufuhröffnung 18a bis 18d diskontinuierlich oder kontinuierlich Rohstoffpulver zugeführt werden.

Auf ihrer der Oberfläche des Trägers 12 zugewandten Unterseite sind die Pulverkammern 16a bis 16d der Pulverauftragvorrichtung 10 mit Pulverauslassöffnungen 19a bis 19d versehen. Über die Pulverauslassöffnungen 19a bis 19d kann Rohstoffpulver aus den Pulverkammern 16a bis 16d auf die Oberfläche des Trägers 12 aufgebracht werden, während die Pulverauftragvorrichtung 10 über die Trägeroberfläche bewegt wird. Dadurch wird auf der Trägeroberfläche eine Rohstoffpulverschicht erzeugt. Die Rohstoffpulverschicht kann dann zum schichtweisen Aufbau eines Werkstücks von einer Lasereinrichtung ortselektiv mit elektromagnetischer Strahlung oder Teilchenstrahlung, insbesondere Laserstrahlung beaufschlagt werden. Die Pulverkammern 16a bis 16d der Pulverauftragvorrichtung 10 können mit unterschiedlichen Rohstoffpulvern befüllt werden, wobei die Rohstoffpulver Kunststoffpulver, keramische Pulver und/oder metallische Pulver sein können. Mit Hilfe der Pulverauftragvorrichtung 10 können somit bei der Herstellung von Werkstücken durch selektives Beaufschlagen von Pulverschichten mit elektromagnetischer Strahlung oder Teilchenstrahlung, insbesondere Laserschmelzen oder Lasersintern verschiedene Rohstoffpulver verarbeitet werden.

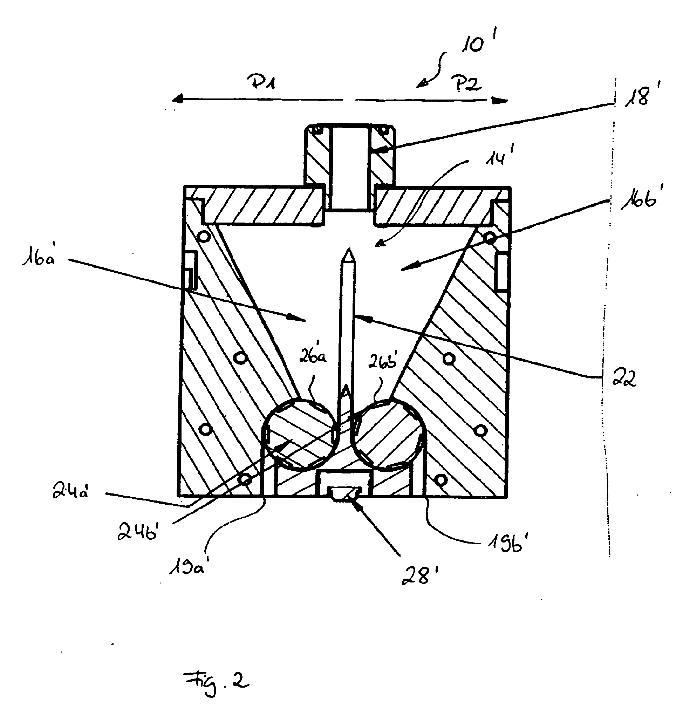

Bei der in Fig. 2 veranschaulichten Pulverauftragvorrichtung 10' umfasst der Pulverraum 14' zwei Pulverkammern 16a', 16b'. Die Pulverkammern 16a', 16b' sind mittels einer Trennwand 22' voneinander getrennt. Den Pulverkammern 16a', 16b' sind über eine gemeinsame Pulverzufuhröffnung 18' mittels einer beispielsweise in Form eines Zufuhrschlauchs oder dergleichen gestaltete geeignete Zufuhrvorrichtung gleiche oder unterschiedliche Rohstoffpulver diskontinuierlich oder kontinuierlich zuführbar. Die Pulverkammern 16a', 16b' sind wiederum jeweils mit einer Pulverauslassöffnung 19a', 19b' versehen, durch die Rohstoffpulver aus den Pulverkammern 16a', 16b' auf eine Oberfläche eines nicht gezeigten Trägers einer Anlage zur Herstellung von Werkstücken durch Beaufschlagen von Pulverschichten mit elektromagnetischer Strahlung oder Teilchenstrahlung aufgebracht werden kann.

In den Pulverkammern 16a', 16b' der Pulverauftragvorrichtung 10' ist jeweils eine Förderwelle 24a', 24b' angeordnet. Während die Förderwelle 24a' von einer Antriebseinrichtung im Uhrzeigersinn angetrieben wird, wird die Förderwelle 24b' von einer Antriebseinrichtung im Gegenuhrzeigersinn angetrieben. Die Förderwellen 24a', 24b' dienen dazu, das in den Pulverkammern 16a', 16b' aufgenommene Rohstoffpulver in Richtung der Pulverauslassöffnungen 19a', 19b' zu fördern. Zur Verbesserung ihrer Förderwirkung sind die Förderwellen 24a', 24b' auf ihrer Oberfläche mit einer Mehrzahl von Vertiefungen 26a', 26b' versehen. Die Förderwellen 24a', 24b' sind so positioniert, dass sie in einem Ruhezustand, d.h. in einem nicht angetriebenen Zustand, die Pulverauslassöffnungen 19a', 19b' der Pulverkammern 16a', 16b' verschließen. Obwohl dies in Fig. 1 nicht veranschaulicht ist, versteht es sich, dass auch die in Fig. 1 gezeigte Pulverauftragvorrichtung 10 mit Förderwellen oder anderen Einrichtungen zur Steuerung der Pulverabfuhr durch die Pulverauslassöffnungen der Pulverkammern versehen sein kann.

Ferner umfasst die Pulverauftragvorrichtung 10' einen zwischen den Pulverauslassöffnungen 19a', 19b' angeordneten Glättungsschieber 28'. Der Glättungsschieber 28' dient dazu, die von der Pulverauftragvorrichtung 10' auf die Trägeroberfläche aufgebrachte Rohstoffpulverschicht zu glätten und auf eine gewünschte Höhe zu nivellieren. Wenn die Pulverauftragvorrichtung 10 in einer durch den Pfeil P1 angedeuteten Bewegungsrichtung über die Trägeroberfläche bewegt wird, ist der Glättungsschieber 28' bezogen auf die Bewegungsrichtung der Pulverauftragvorrichtung 10 hinter der Pulverauslassöffnung 19a' angeordnet. Der Glättungsschieber 28' kann dann eine über die Pulverauslassöffnung 19a' auf die Trägeroberfläche aufgebrachte Rohstoffpulverschicht glätten und auf eine gewünschte Höhe bringen. Wenn die Pulverauftragvorrichtung 10' dagegen in der durch den Pfeil P2 angedeuteten Richtung über die Trägeroberfläche bewegt wird, ist der Glättungsschieber 28' hinter der Pulverauslassöffnung 19b' angeordnet. Der Glättungsschieber 28' kann dann eine über die Pulverauslassöffnung 19b' auf die Trägeroberfläche aufgebrachte Rohstoffpulverschicht glätten und auf eine gewünschte Höhe bringen. "Leerfahrten" werden bei dieser Vorgehensweise vermieden.

Folglich wird die Pulverauftragvorrichtung 10 in Richtung des Pfeils P1 über die Trägeroberfläche bewegt, wenn Rohstoffpulver aus der Pulverkammer 16a' auf die Trägeroberfläche aufgebracht werden soll. Wenn dagegen Rohstoffpulver aus der Pulverkammer 16b' auf die Trägeroberfläche aufgebracht werden soll, wird die Pulverauftragvorrichtung 10' in Richtung des Pfeils P2 über die Trägeroberfläche bewegt. Wenn die Pulverkammern 16a', 16b' mit dem gleichen Rohstoffpulver gefüllt sind, ist folglich ein Betrieb ohne "Leefahrten" möglich.

In Abhängigkeit der gewünschten Schichtstruktur des herzustellenden Werkstücks kann der Betrieb der Pulverauftragvorrichtung 10' insbesondere bei der Verwendung unterschiedlicher Rohstoffpulver in den Pulverkammern 16a', 16b' jedoch auchgewünschte "Leerfahrten" beinhalten, bei denen die Pulverauftragvorrichtung 10' über die Trägeroberfläche bewegt wird, beide Pulverauslassöffnungen 19a', 19b' aber verschlossen sind, so dass kein Rohstoffpulver auf die Trägeroberfläche aufgebracht wird. Um zu verhindern, dass der Glättungsschieber 28' insbesondere während dieser "Leerfahrten" in störender Weise über die Trägeroberfläche bzw. eine bereits bestehende Werkstückoberfläche streicht, ist der Glättungsschieber 28' vertikal zwischen einer Ruhestellung, in der der Glättungsschieber 28' keinen Kontakt mit einer von der Pulverauftragvorrichtung 10' erzeugten Rohstoffpulveroberfläche bzw. einer bereits bestehenden Werkstückoberfläche hat, und einer Betriebsstellung, in der der Glättungsschieber 28' über die von der Pulverauftragvorrichtung 10' erzeugte Rohstoffpulveroberfläche geführt wird, verschiebbar.

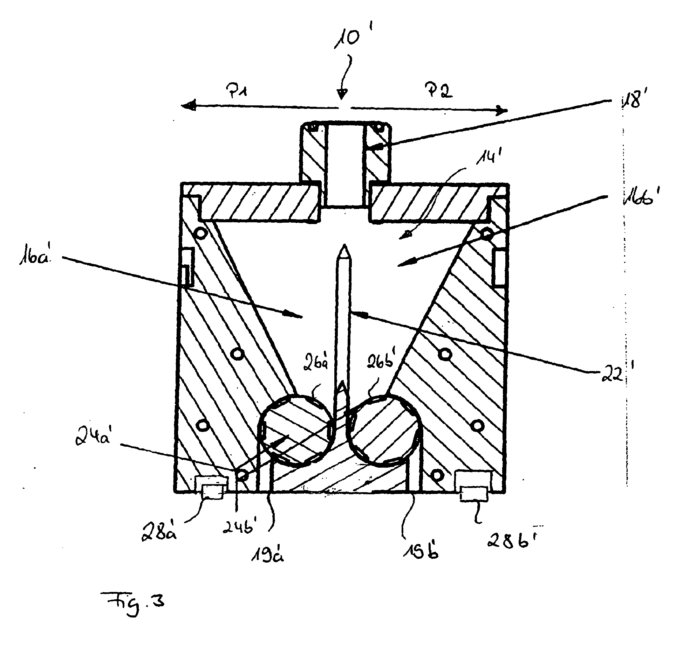

Die in Fig. 3 gezeigte Pulverauftragvorrichtung 10' unterscheidet sich von der Anordnung gemäß Fig. 2 dadurch, dass sie nicht nur einen, sondern zwei Glättungsschieber 28a', 28b' umfasst. Wenn die Pulverauftragvorrichtung 10' in Richtung des Pfeils P1 über die Trägeroberfläche bewegt wird, ist der Glättungschieber 28b' hinter den Pulverauslassöffnungen 19a', 19b' angeordnet. Der Glättungsschieber 28b' kann dann die von der Pulverauftragvorrichtung 10' auf die Trägeroberfläche aufgebrachte Rohstoffpulverschicht glätten und auf eine gewünschte Höhe bringen. Wenn die Pulverauftragvorrichtung 10' dagegen in Richtung des Pfeils P2 über die Trägeroberfläche bewegt wird, ist der Glättungsschieber 28a' hinter den Pulverauslassöffnungen 19a', 19b' angeordnet. In diesem Fall kann der Glättungsschieber 28a' die von der Pulverauftragvorrichtung 10' auf die Trägeroberfläche aufgebrachte Rohstoffpulverschicht glätten und auf eine gewünschte Höhe bringen. Durch die Ausgestaltung der Pulverauftragvorrichtung 10' mit zwei Glättungsschlebern 28a', 28b' können im Betrieb der Pulverauftragvorrichtungen 10' "Leerfahrten" vermieden werden, da unabhängig von der Bewegungsrichtung der Pulverauftragvorrichtung 10' stets ein Glättungsschieber 28a', 28b' hinter den Pulverauslassöffnungen 19a', 19b' angeordnet ist.

Die Glättungsschieber 28a', 28b' sind, ebenso wie der Glättungsschieber 28' der Anordnung gemäß Fig. 2, vertikal zwischen einer Ruhestellung und einer Betriebsstellung verschiebbar. In ihrer Ruhestellung haben die Glättungsschleber 28a', 28b' keinen Kontakt mit einer von der Pulverauftragvorrlchtung 10' erzeugten Rohstoffpulveroberfläche bzw. einer bereits bestehenden Werkstückoberfläche. In ihrer Betriebsstellung werden die Glättungsschieber 28a', 28b' dagegen über die von der Pulverauftragvorrichtung 10' erzeugte Rohstoffpulveroberfläche geführt, um diese zu glätten und auf eine gewünschte Höhe zu bringen. Die Glättungsschieber 28a', 28b' sind unabhängig voneinander in ihre Ruhestellung bzw. ihre Betriebsstellung steuerbar. Vorzugsweise befindet sich im Betrieb der Pulverauftragvorrichtung 10' jedoch stets der Glättungsschieber 28a', 28b' in seiner Betriebsstellung, der bezogen auf die Bewegungsrichtung der Pulverauftragvorrichtung 10' hinter den Pulverauslassöffnungen 19a', 19b' angeordnet ist. Der bezogen auf die Bewegungsrichtung der Pulverauftragvorrichtung 10' vor den Pulverauslassöffnungen 19a', 19b' positionierte Glättungsschleber 28a', 28b' befindet sich dagegen im Betrieb der Pulverauftragvorrichtung 10' üblicherweise in seiner Ruhestellung. Im Übrigen entsprechen der Aufbau und die Funktionsweise der Pulverauftragvorrichtung 10' gemäß Fig. 3 dem Aufbau und der Funktionsweise der Anordnung nach Fig. 2.

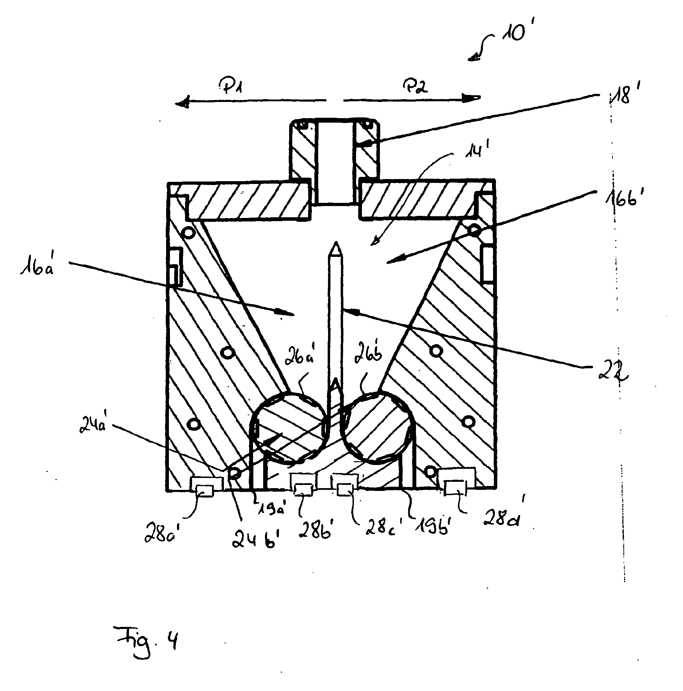

Fig. 4 zeigt eine Pulverauftragvorrichtung 10', die sich von der Anordnung gemäß Fig. 3 dadurch unterscheidet, dass sie statt zwei vier Glättungsschieber 28a' bis 28d' umfasst. Die Glättungsschieber 28a', 28b' sind der Pulverauslassöffnung 19a' zugeordnet und dienen dazu, eine über die Pulverauslassöffnung 19a' auf einer Trägeroberfläche erzeugte Rohstoffpulverschicht zu glätten und auf eine gewünschte Höhe zu bringen. Die Glättungsschieber 28c', 28d' sind dagegen der Pulverauslassöffnung 19b' zugeordnet und dienen dazu, eine Rohstoffpulverschicht zu glätten und auf eine gewünschte Höhe zu bringen, die über die Pulverauslassöffnung 19b' auf die Trägeroberfläche aufgebracht wird. Die Glättungsschleber 28a' bis 28d' sind unabhängig voneinander vertikal zwischen einer Ruhestellung, in der sie keinen Kontakt mit einer von der Pulverauftragvorrichtung 10' erzeugten Rohstoffpulveroberfläche bzw. einer bereits bestehenden Werkstückoberfläche haben, und einer Betriebsstellung, in der sie über die von der Pulverauftragvorrichtung 10' erzeugte Rohstoffpulveroberfläche geführt werden, verschiebbar.

Wenn die Rohstoffpulverabgabe aus der Pulverauftragvorrichtung 10' auf die Trägeroberfläche über die Pulverauslassöffnung 19a' erfolgt, befinden sich die der Pulverauslassöffnung 19b' zugeordneten Glättungsschieber 28c', 28d' in ihrer Ruhestellung. Ein der Pulverauslassöffnung 19a' zugeordneter Glättungsschieber 28a', 28b' befindet sich dagegen in seiner Betriebsstellung. Dies ist bei einer Bewegung der Pulverauftragvorrichtung 10' in Richtung des Pfeils P1 der Glättungsschieber 28b' und bei einer Bewegung der Pulverauftragsrichtung 10' in Richtung des Pfeils P2 der Glättungsschieber 28a'. Wenn die Pulverabgabe aus der Pulverauftragvorrichtung 10' auf die Trägeroberfläche dagegen über die Pulverauslassöffnung 19b' erfolgt, befinden sich die der Pulverauslassöffnung 19a' zugeordneten Glättungsschieber 28a', 28b' in ihrer Ruhestellung. Ein der Pulverauslassöffnung 19b' zugeordneter Glättungsschieber 28c', 28d' befindet sich dagegen in seiner Betriebsstellung. Bei einer Bewegung der Pulverauftragvorrichtung 10' in Richtung des Pfeils P1 ist dies der Glättungsschieber 28d' und bei einer Bewegung der Pulverauftragvorrichtung 10' in Richtung des Pfeils P2 der Glättungsschieber 28c'.

Durch den Einsatz verschiedener Glättungsschieber 28a' bis 28d' zur Glättung von über verschiedene Pulverauslassöffnungen 19a', 19b' aus der Pulverauftragvorrichtung 10' abgegebene Rohstoffpulverschichten wird eine Verunreinigung der Rohstoffpulverschichten mit an den Glättungsschiebern 28a' bis 28d' anhaftenden Pulverpartikeln zuverlässig verhindert. Ferner werden durch den Einsatz von vier Glättungsschiebern 28a' bis 28d' im Betrieb der Pulverauftragvorrichtung 10' "Leerfahrten" vermieden, da unabhängig von der Bewegungsrichtung der Pulverauftragvorrichtung 10' jeder Pulverauslassöffnung 19a', 19b' stets ein hinter der Pulverauslassöffnung 19a', 19b' angeordneter Glättungsschieber 28a' bis 28d' zugeordnet ist. Im Übrigen entsprechen der Aufbau und die Funktionsweise der Pulverauftragvorrichtung 10' gemäß Fig. 4 dem Aufbau und der Funktionsweise der Anordnung gemäß Fig. 3.

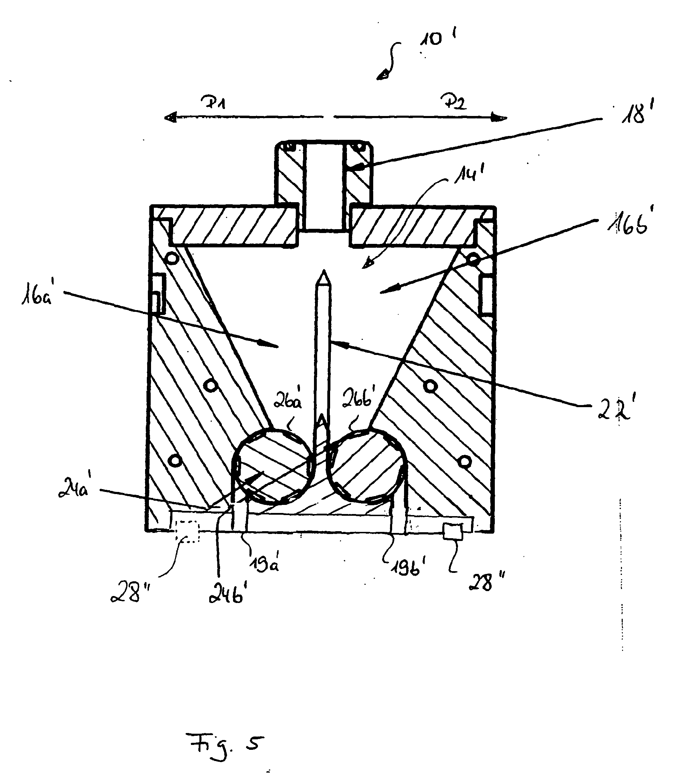

Die in Fig. 5 veranschaulichte Pulverauftragvorrichtung 10' unterscheidet sich von der Anordnung gemäß Fig. 3 dadurch, dass sie nicht zwei, sondern lediglich einen Glättungsschieber 28" umfasst Der Glättungsschieber 28" ist jedoch nicht nur vertikal zwischen einer Ruhestellung und einer Betriebsstellung, sondern auch horizontal zwischen einer ersten und in Fig. 5 gestrichelt angedeuteten zweiten Stellung verschiebbar. Wenn die Pulverauftragvorrichtung 10' in Richtung des Pfeils P1 über eine Trägeroberfläche bewegt wird, befindet sich der Glättungsschieber 28" in seiner ersten Stellung hinter den Pulverauslassöffnungen 19a', 19b' und kann die von der Pulverauftragvorrichtung 10' erzeugte Rohstoffpulverschicht glätten und auf eine gewünschte Höhe bringen. Bei einer Bewegung der Pulverauftragvorrichtung 10' in Richtung des Pfeils P2 kann der Glättungsschieber 28" dagegen in seine in Fig. 5 gestrichelt dargestellte zweite Stellung gebracht werden, in der er wiederum bezogen auf die Bewegungsrichtung der Pulverauftragvorrichtung 10' hinter den Pulverauslassöffnungen 19a', 19b' angeordnet ist. Der Einsatz eines horizontal verschiebbaren Glättungsschiebers 28" ermöglicht somit im Betrieb der Pulverauftragvorrichtung 10' die Vermeidung von "Leerfahrten", ohne dass hierzu, wie in der Anordnung gemäß Fig. 3, ein zweiter Schieber erforderlich ist. Im Übrigen entsprechen der Aufbau und die Funktionsweise der Pulverauftragvorrichtung 10 gemäß Fig. 5 dem Aufbau und der Funktionsweise der in Fig. 3 gezeigten Anordnung.

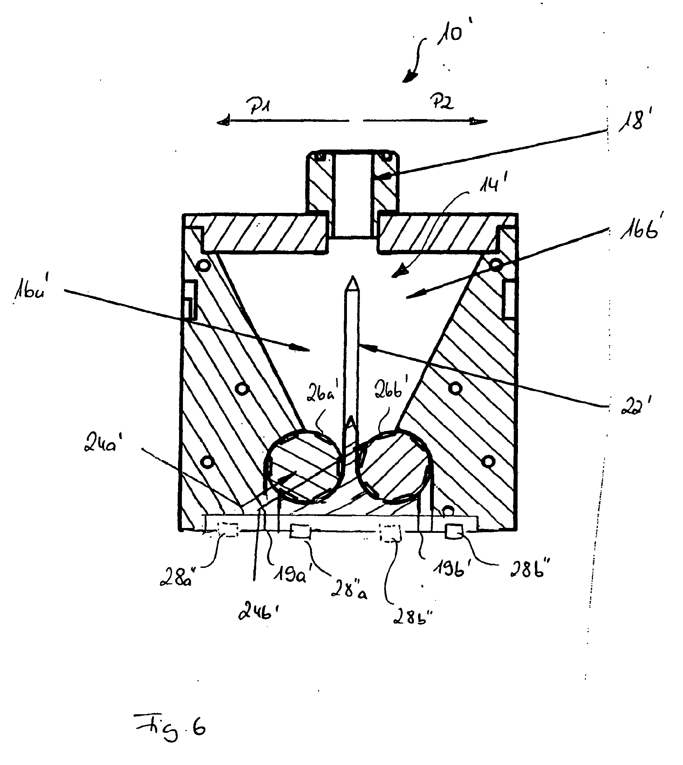

Schließlich zeigt Fig. 6 eine Pulverauftragvorrichtung 10', die mit zwei vertikal zwischen einer Ruhestellung und einer Betriebsstellung sowie horizontal zwischen einer ersten und einer in Fig. 6 gestrichelt dargestellten zweiten Stellung verschiebbar sind. Der Glättungsschieber 28a" ist der Pulverauslassöffnung 19a' zugeordnet, während der Glättungsschieber 28b" der Pulverauslassöffnung 19b' zugeordnet ist.

Wenn im Betrieb der Pulverauftragvorrichtung 10' über die Pulverauslassöffnung 19a' Pulver ausgegeben wird, befindet sich der Glättungsschieber 28b" in seiner Ruhestellung. Bei einer Bewegung der Pulverauftragvorrichtung 10' in Richtung des Pfeils P1 befindet sich der Glättungsschieber 28a" dagegen in seiner ersten Stellung und bei einer Bewegung der Pulverauftragvorrichtung 10' in Richtung des Pfeils P2 in seiner in Fig. 6 gestrichelt dargestellten zweiten Stellung. Wenn dagegen über die Pulverauslassöffnung 19b' Rohstoffpulver auf eine Trägeroberfläche aufgetragen wird, befindet sich der Glättungsschieber 28a" in seiner Ruhestellung. Bei einer Bewegung der Pulverauftragvorrichtung 10' in Richtung des Pfeils P1 befindet sich der Glättungsschieber 28b" in seiner ersten Stellung und bei einer Bewegung der Pulverauftragvorrichtung 10" in Richtung des Pfeils P2 in seiner in Fig. 6 gestrichelt dargestellten zweiten Stellung.

Ähnlich wie bei der Anordnung gemäß Fig. 5 werden durch den Einsatz horizontal verschiebbarer Glättungsschieber 28a", 28b" bei der in Fig. 6 veranschaulichten Pulverauftragvorrichtung 10' im Betrieb "Leerfahrten" vermieden. Darüber hinaus werden durch die Zuordnung separater Glättungsschieber 28a", 28b" zu den Pulverauslassöffnungen 19a', 19b' Verunreinigungen der von der Pulverauftragvorrichtung 10' auf einer Trägeroberfläche erzeugten Rohstoffpulverschicht durch an den Glättungsschiebern 28a", 28b" anhaftende Pulverpartikel zuverlässig vermieden. Im Übrigen entsprechen der Aufbau und die Funktionsweise der Pulverauftragvorrichtung 10' gemäß Fig. 6 dem Aufbau und der Funktionsweise der in Fig. 5 veranschaulichten Anordnung.

## Patentansprüche

1. Träger- und Pulverauftragvorrichtung (10, 10') zur Verwendung in einer Anlage zur Herstellung von Werkstücken durch Beaufschlagen von Pulverschichten mit elektromagnetischer Strahlung oder Teilchenstrahlung, mit:
- einem Träger (12) zur Aufnahme eines Rohstoffpulvers sowie eines durch ein generatives Schichtbauverfahren aus dem Rohstoffpulver hergestellten Werkstücks,
- mindestens einer Pulverzufuhröffnung (18a-18d; 18') und
- einem Pulverraum (14; 14') zur Aufnahme von auf den Träger (12) aufzubringendem Rohstoffpulver,
**dadurch gekennzeichnet, dass** der Pulverraum (14; 14') mindestens zwei voneinander getrennte Pulverkammern (16a-16d; 16a', 16b') umfasst, wobei jede Pulverkammer (16a-16d; 16a', 16b') mit einer Pulverauslassöffnung (19a-19d; 19a', 19b') zur Abgabe von Rohstoffpulver aus der Pulverkammer (16a-16d; 16a', 16b') auf den Träger (12) versehen ist, und wobei in jeder Pulverkammer (16a-16d; 16a', 16b') eine von einer Antriebseinrichtung antreibbare Förderwelle (24a', 24b') zur Förderung von in der Pulverkammer (16a-16d; 16a', 16b') aufgenommenem Rohstoffpulver in Richtung der Pulverauslassöffnung (19a-19d; 19a', 19b') angeordnet ist, die in einem nicht angetriebenen Zustand die Pulverauslassöffnung (19a-19d; 19a', 19b') der Pulverkammer (16a-16d; 16a', 16b') verschließt.

2. Träger- und Pulverauftragvorrichtung nach Anspruch 1,
**dadurch gekennzeichnet, dass** der Pulverraum (14; 14') lösbar miteinander verbundene, modular aufgebaute Pulverkammern (16a-16d) und/oder mittels einer Trennwand (22') voneinander getrennte Pulverkammern (16a', 16b') umfasst.

3. Träger- und Pulverauftragvorrichtung nach Anspruch 1 oder 2,
**gekennzeichnet durch** einen Glättungsschieber (28'; 28a'-28d'; 28"; 28a", 28b"), der derart relativ zu einer Pulverauslassöffnung (19a', 19b') einer Pulverkammer (16a', 16b') positionierbar ist, dass er im Betrieb der Pulverauftragvorrichtung (10'), wenn die Pulverauftragvorrichtung (10') über den Träger (12) der Anlage zur Herstellung von Werkstücken **durch** Beaufschlagen von Pulverschichten mit elektromagnetischer Strahlung oder Teilchenstrahlung bewegt wird, über eine **durch** die Pulverauslassöffnung (19a,'19b) auf den Träger (12) aufgebrachte Rohstoffpulverschicht streicht, um die Rohstoffpulverschicht zu glätten.

4. Träger- und Pulverauftragvorrichtung nach einem der Ansprüche 1 bis 3,
**gekennzeichnet durch** einen ersten und einen zweiten Glättungsschieber (28a', 28b'), die derart relativ zu den Pulverauslassöffnungen (19a', 19b') der Pulverkammern (16a', 16b') positionierbar sind, dass im Betrieb der Pulverauftragvorrichtung (10'), wenn die Pulverauftragvorrichtung (10') über den Träger (12) der Anlage zur Herstellung von Werkstücken **durch** Beaufschlagen von Pulverschichten mit elektromagnetischer Strahlung oder Teilchenstrahlung bewegt wird, einer der Glättungsschieber (28a', 28b') über eine **durch** mindestens eine Pulverauslassöffnung (19a', 19b') auf den Träger (12) aufgebrachte Rohstoffpulverschicht streicht, um die Rohstoffpulverschicht zu glätten.

5. Träger- und Pulverauftragvorrichtung nach einem der Ansprüche 1 bis 4,
**dadurch gekennzeichnet, dass** jeder Pulverauslassöffnung (19a', 19b') einer Pulverkammer (16a', 16b') ein Glättungsschieber (28a'-28d'; 28a", 28b") zugeordnet ist, der derart relativ zu der Pulverauslassöffnung (19a', 19b') positionierbar ist, dass er im Betrieb der Pulverauftragvorrichtung (10'), wenn die Pulverauftragvorrichtung (10') über den Träger (12) der Anlage zur Herstellung von Werkstücken durch Beaufschlagen von Pulverschichten mit elektromagnetischer Strahlung oder Teilchenstrahlung bewegt wird, über eine durch die Pulverauslassöffnung (19a', 19b') auf den Träger (12) aufgebrachte Rohstoffpulverschicht streicht, um die Rohstoffpulverschicht zu glätten.

6. Träger- und Pulverauftragvorrichtung nach einem der Ansprüche 1 bis 5,
**dadurch gekennzeichnet, dass** jeder Pulverauslassöffnung (19a', 19b') einer Pulverkammer (16a', 16b') ein erster und ein zweiter Glättungsschieber (28a'-28d') zugeordnet sind, die derart relativ zu der Pulverauslassöffnung (19a', 19b') positionierbar sind, dass im Betrieb der Pulverauftragvorrichtung (10'), wenn die Pulverauftragvorrichtung (10') über den Träger (12) der Anlage zur Herstellung von Werkstücken durch Beaufschlagen von Pulverschichten mit elektromagnetischer Strahlung oder Teilchenstrahlung bewegt wird, einer der Glättungsschieber (28a'-28d') über eine durch die Pulverauslassöffnung (19a', 19b') auf den Träger (12) aufgebrachte Rohstoffpulverschicht streicht, um die Rohstoffpulverschicht zu glätten.

7. Träger- und Pulverauftragvorrichtung nach einem der Ansprüche 3 bis 6,
**dadurch gekennzeichnet, dass** ein Glättungsschieber (28'; 28a'-28d'; 28"; 28a", 28b") vertikal zwischen einer Ruhestellung, in der der Glättungsschieber (28'; 28a'-28d'; 28"; 28a", 28b") im Betrieb der Pulverauftragvorrichtung (10'), wenn die Pulverauftragvorrichtung (10') über den Träger (12) der Anlage zur Herstellung von Werkstücken durch Beaufschlagen von Pulverschichten mit elektromagnetischer Strahlung oder Teilchenstrahlung bewegt wird, keinen Kontakt mit einer durch mindestens eine Pulverauslassöffnung (19a', 19b') auf den Träger (12) aufgebrachte Rohstoffpulverschicht hat, und einer Betriebsstellung verschiebbar ist, in der der Glättungsschieber (28'; 28a'-28d'; 28"; 28a", 28b") im Betrieb der Pulverauftragvorrichtung (10'), wenn die Pulverauftragvorrichtung (10') über den Träger (12) der Anlage zur Herstellung von Werkstücken durch Beaufschlagen von Pulverschichten mit elektromagnetischer Strahlung oder Teilchenstrahlung bewegt wird, über die Rohstoffpulverschicht streicht, um die Rohstoffpulverschicht zu glätten.

8. Träger- und Pulverauftragvorrichtung nach einem der Ansprüche 3 bis 7,
**dadurch gekennzeichnet, dass** ein Glättungsschieber (28"; 28a", 28b") horizontal zwischen einer ersten Stellung und einer zweiten Stellung verschiebbar ist, so dass der Glättungsschieber (28"; 28a", 28b") im Betrieb der Pulverauftragvorrichtung (10'), wenn die Pulverauftragvorrichtung (10') in entgegengesetzte Richtungen über den Träger (12) der Anlage zur Herstellung von Werkstücken durch Beaufschlagen von Pulverschichten mit elektromagnetischer Strahlung oder Teilchenstrahlung hinund herbewegt wird, stets derart relativ zu einer Pulverauslassöffnung (19a', 19b') einer Pulverkammer (16a', 16b') positionierbar ist, dass er über eine durch die Pulverauslassöffnung (19a', 19b') auf den Träger (12) aufgebrachte Rohstoffpulverschicht streicht, um die Rohstoffpulverschicht zu glätten.

9. Träger- und Pulverauftragvorrichtung nach Anspruch 7 oder 8,
**dadurch gekennzeichnet, dass** ein horizontal und/oder vertikal verschiebbarer Glättungsschieber (28'; 28a'-28d'; 28"; 28a", 28b") mit einer Einrichtung zur Steuerung der Pulverabfuhr durch eine Pulverauslassöffnung (19a-19d; 19a', 19b') einer Pulverkammer (16a-16d; 16a', 16b') gekoppelt ist, die die Pulverauslassöffnung (19a', 19b') der Pulverkammer (16a', 16b') in Abhängigkeit einer Stellung des Glättungsschiebers (28'; 28a'-28d'; 28"; 28a", 28b") verschließt oder freigibt.

10. Anlage zur Herstellung von Werkstücken durch Beaufschlagen von Pulverschichten mit elektromagnetischer Strahlung oder Teilchenstrahlung, mit:
- einer Bestrahlungseinrichtung zur selektiven Beaufschlagung einer auf einen Träger (12) aufgebrachten Rohstoffpulverschicht (20) mit elektromagnetischer Strahlung oder Teilchenstrahlung,
**gekennzeichnet durcheine** Träger- und Pulverauftragvonichtung (10; 10') nach einem der Ansprüche 1 bis 9.

## Claims

1. Carrier and powder application device (10, 10') for use in a plant for manufacturing work pieces by impinging powder layers with electromagnetic radiation or particle radiation, comprising:
- a carrier (12) for receiving a raw material powder and a work piece manufactured from said raw material powder by a generative layer construction process,
- at least one powder supply opening (18a-18d; 18'), and
- a powder room (14; 14') for receiving raw material powder to be applied onto the carrier (12),
**characterized in that** the powder room (14; 14') comprises at least two separate powder chambers (16a-16d; 16a', 16b'), wherein each powder chamber (16a-16d; 16a', 16b') is provided with a powder outlet opening (19a-19d; 19a', 19b') for discharging raw material powder from the powder chamber (16a-16d; 16a', 16b') onto the carrier (12), and wherein a conveyor shaft (24a', 24b'), which is drivable by a drive means, is arranged in each powder chamber (16a-16d; 16a', 16b') for conveying raw material powder received in the powder chamber (16a-16d; 16a', 16b') towards the powder outlet opening (19a-19d; 19a', 19b'), which conveyor shaft closes the powder outlet opening (19a-19d; 19a', 19b') of the powder chamber (16a-16d; 16a', 16b') in a non-driven state.

2. Carrier and powder application device according to claim 1,
**characterized in that** the powder room (14; 14') comprises releasably connected powder chambers (16a-16d) of modular design and/or powder chambers (16a', 16b') separated by a partition wall (22').

3. Carrier and powder application device according to claim 1 or 2,
**characterized by** a levelling slider (28'; 28a'-28d', 28", 28a", 28b") which is positionable relative to a powder outlet opening (19a', 19b') of a powder chamber (16a', 16b') such that it sweeps across a raw material powder layer applied onto the carrier (12) via the powder outlet opening (19a', 19b') in order to level the raw material powder layer during operation of the powder application device (10'), when the powder application device (10') is moved across the carrier (12) of the plant for manufacturing work pieces by impinging powder layers with electromagnetic radiation or particle radiation.

4. Carrier and powder application device according to any one of claims 1 to 3, **characterized by** a first and a second levelling slider (28a'; 28b') which are positionable relative to the powder outlet openings (19a', 19b') of the powder chambers (16a', 16b') such that one of the levelling sliders (28a', 28b') sweeps across a raw material powder layer applied onto the carrier (12) via at least one powder outlet opening (19a', 19b') in order to level the raw material powder layer during operation of the powder application device (10'), when the powder application device (10') is moved across the carrier (12) of the plant for manufacturing work pieces by impinging powder layers with electromagnetic radiation or particle radiation.

5. Carrier and powder application device according to any one of claims 1 to 4, **characterized in that** a levelling slider (28a'-28d'; 28a", 28b") is associated with each powder outlet opening (19a', 19b') of a powder chamber (16a', 16b'), which levelling slider is positionable relative to the powder outlet opening (19a', 19b') such that it sweeps across a raw material powder layer applied onto the carrier (12) via the powder outlet opening (19a', 19b') in order to level the raw material powder layer during operation of the powder application device (10'), when the powder application device (10') is moved across the carrier (12) of the plant for manufacturing work pieces by impinging powder layers with electromagnetic radiation or particle radiation.

6. Carrier and powder application device according to any one of claims 1 to 5, **characterized in that** first and second levelling sliders (28a'-28d') are associated with each powder outlet opening (19a', 19b') of a powder chamber (16a', 16b'), which levelling sliders are positionable relative to the powder outlet opening (19a', 19b') such that one of the levelling sliders (28a'-28d') sweeps across a raw material powder layer applied onto the carrier (12) via the powder outlet opening (19a', 19b') in order to level the raw material powder layer during operation of the powder application device (10'), when the powder application device (10') is moved across the carrier (12) of the plant for manufacturing work pieces by impinging powder layers with electromagnetic radiation or particle radiation.

7. Carrier and powder application device according to any one of claims 3 to 6, **characterized in that** a levelling slider (28'; 28a'-28d'; 28"; 28a", 28b") is moved vertically between a rest position, in which the levelling slider (28'; 28a'-28d'; 28"; 28a", 28b") is not in contact with a raw material powder layer applied onto the carrier (12) via at least one powder outlet opening (19a', 19b') during operation of the powder application device (10'), when the powder application device (10') is moved across the carrier (12) of the plant for manufacturing work pieces by impinging powder layers with electromagnetic radiation or particle radiation, and an operating position, in which the levelling slider (28'; 28a'-28d'; 28"; 28a", 28b") sweeps across the raw material powder layer in order to level the raw material powder layer during operation of the powder application device (10'), when the powder application device (10') is moved across the carrier (12) of the plant for manufacturing work pieces by impinging powder layers with electromagnetic radiation or particle radiation.

8. Carrier and powder application device according to any one of claims 3 to 7,
**characterized in that** a levelling slider (28"; 28a", 28b") is horizontally displaceable between a first and a second position such that the levelling slider (28"; 28a", 28b") is always positionable relative to a powder outlet opening (19a', 19b') of a powder chamber (16a', 16b') such that it sweeps across a raw material powder layer applied onto the carrier (12) via the powder outlet opening (19a', 19b') in order to level the raw material powder layer during operation of the powder application device (10'), when the powder application device (10') is reciprocated in opposite directions across the carrier (12) of the plant for manufacturing work pieces by impinging powder layers with electromagnetic radiation or particle radiation.

9. Carrier and powder application device according to claim 7 or 8,
**characterized in that** a horizontally and/or vertically displaceable levelling slider (28'; 28a'-28d'; 28"; 28a", 28b") is coupled to a device for controlling the powder discharge via a powder outlet opening (19a-19d; 19a', 19b') of a powder chamber (16a-16d; 16a', 16b'), which device closes or releases the powder outlet opening (19a', 19b') of the powder chamber (16a', 16b') as a function of a position of the levelling slider (28'; 28a'-28d'; 28"; 28a", 28b").

10. Plant for manufacturing work pieces by impinging powder layers with electromagnetic radiation or particle radiation, comprising:
- an irradiation device for selectively impinging a raw material powder layer (20) applied onto a carrier (12) with electromagnetic radiation or particle radiation, **characterized by** a carrier and powder application device (10; 10') according to any one of claims 1 to 9.

## Revendications

1. Dispositif d'application de poudre sur un support (10, 10') destiné à être utilisé dans une installation de fabrication de pièces usinées par revêtement par couches de poudre à l'aide d'un rayonnement électromagnétique ou d'un rayonnement de particules, comprenant :
- un support (12) destiné à recevoir une poudre de matière première et une pièce usinée fabriquée à partir d'une poudre de matière première à l'aide d'un procédé de fabrication opérant par revêtement par couches,
- au moins une ouverture d'alimentation en poudre (18a à 18d ; 18') et
- un espace à poudre (14 ; 14') destiné à recevoir la poudre de matière première à appliquer sur le support (12),
**caractérisé en ce que** l'espace à poudre (14 ; 14') comprend au moins deux chambres à poudre séparées l'une de l'autre (16a à 16d ; 16a', 16b'), chaque chambre à poudre (16a à 16d ; 16a' 16b') étant munie d'une ouverture de sortie de poudre (19a à 19d ; 19a', 19b') permettant le dépôt de poudre de matière première sur le support (12) à partir de ladite chambre à poudre (16a à 16d ; 16a', 16b'), et un arbre convoyeur (24a', 24b') entraînable à l'aide d'un dispositif d'entraînement et servant à acheminer vers l'ouverture de sortie de poudre (19a à 19d ; 19a', 19b') la poudre de matière première logée dans la chambre à poudre (16a à 16d ; 16a', 16b') étant disposé dans chaque chambre à poudre (16a à 16d ; 16a', 16b'), lequel arbre, dans un état non entraîné, ferme l'ouverture de sortie de poudre (19a à 19d ; 19a', 19b') de la chambre à poudre (16a à 16d ; 16a', 16b').

2. Dispositif d'application de poudre sur un support selon la revendication 1, **caractérisé en ce que** l'espace à poudre (14 ; 14') comprend des chambres à poudre (16a à 16d) conçues de manière modulaire et reliées les unes aux autres de façon démontable et/ou des chambres à poudre (16a', 16b') séparées les unes des autres par une cloison de séparation (22').

3. Dispositif d'application de poudre sur un support selon la revendication 1 ou 2, **caractérisé par** un coulisseau de lissage (28a', 28a' à 28d' ; 28" ; 28a", 28b") qui est positionnable de telle manière par rapport à une ouverture de sortie de poudre (19a', 19b') d'une chambre à poudre (16a', 16b') qu'il passe sur une couche de poudre de matière première déposée sur le support (12) depuis l'ouverture de sortie de poudre (19a', 19b') pour la lisser, lorsque le dispositif d'application de poudre (10') fonctionne et qu'il est déplacé au-dessus du support (12) de l'installation de fabrication de pièces usinées par revêtement par couches de poudre à l'aide d'un rayonnement électromagnétique ou d'un rayonnement de particules.

4. Dispositif d'application de poudre sur un support selon l'une des revendications 1 à 3, **caractérisé par** un premier et un deuxième coulisseau de lissage (28a', 28b') qui sont positionnables de telle manière par rapport aux ouvertures de sortie de poudre (19a', 19b') des chambres à poudre (16a', 16b') qu'un des coulisseaux de lissage (28a', 28b') passe sur une couche de poudre de matière première déposée sur le support (12) depuis au moins une ouverture de sortie de poudre (19a', 19b') pour la lisser, lorsque le dispositif d'application de poudre (10') fonctionne et qu'il est déplacé au-dessus du support (12) de l'installation de fabrication de pièces usinées par revêtement par couches de poudre à l'aide d'un rayonnement électromagnétique ou d'un rayonnement de particules.

5. Dispositif d'application de poudre sur un support selon l'une des revendications 1 à 4, **caractérisé en ce qu'**un coulisseau de lissage (28a' à 28d' ; 28a", 28b") est associé à chaque ouverture de sortie de poudre (19a', 19b') d'une chambre à poudre (16a', 16b'), lequel est positionnable de telle manière par rapport à l'ouverture de sortie de poudre (19a', 19b') qu'il passe sur une couche de poudre de matière première déposée sur le support (12) depuis l'ouverture de sortie de poudre (19a', 19b') pour la lisser, lorsque le dispositif d'application de poudre (10') fonctionne et qu'il est déplacé au-dessus du support (12) de l'installation de fabrication de pièces usinées par revêtement par couches de poudre à l'aide d'un rayonnement électromagnétique ou d'un rayonnement de particules.

6. Dispositif d'application de poudre sur un support selon l'une des revendications 1 à 5, **caractérisé en ce qu'**un premier et un deuxième coulisseau de lissage (28a' à 28d') sont associés à chaque ouverture de sortie de poudre (19a', 19b') d'une chambre à poudre (16a', 16b'), lesquels sont positionnables de telle manière par rapport à l'ouverture de sortie de poudre (19a', 19b') qu'un des coulisseaux de lissage (28a' à 28d') passe sur une couche de poudre de matière première déposée sur le support (12) depuis l'ouverture de sortie de poudre (19a', 19b') pour la lisser, lorsque le dispositif d'application de poudre (10') fonctionne et qu'il est déplacé au-dessus du support (12) de l'installation de fabrication de pièces usinées par revêtement par couches de poudre à l'aide d'un rayonnement électromagnétique ou d'un rayonnement de particules.

7. Dispositif d'application de poudre sur un support selon l'une des revendications 3 à 6, **caractérisé en ce qu'**un coulisseau de lissage (28' ; 28a' à 28d' ; 28" ; 28a", 28b") est verticalement déplaçable entre une position de repos, dans laquelle le coulisseau de lissage (28' ; 28a' à 28d' ; 28" ; 28a", 28b") n'est pas en contact avec une couche de poudre de matière première déposée sur le support (12) depuis au moins une ouverture de sortie de poudre (19a', 19b'), lorsque le dispositif d'application de poudre (10') fonctionne et qu'il est déplacé au-dessus du support (12) de l'installation de fabrication de pièces usinées par revêtement par couches de poudre à l'aide d'un rayonnement électromagnétique ou d'un rayonnement de particules, et une position de fonctionnement, dans laquelle le coulisseau de lissage (28' ; 28a' à 28d' ; 28" ; 28a", 28b") passe sur la couche de poudre de matière première déposée sur le support (12) pour la lisser, lorsque le dispositif d'application de poudre (10') fonctionne et qu'il est déplacé au-dessus du support (12) de l'installation de fabrication de pièces usinées par revêtement par couches de poudre à l'aide d'un rayonnement électromagnétique ou d'un rayonnement de particules.

8. Dispositif d'application de poudre sur un support selon l'une des revendications 3 à 7, **caractérisé en ce qu'**un coulisseau de lissage (28" ; 28a", 28b") est horizontalement déplaçable entre une première et une deuxième position si bien que le coulisseau de lissage (28" ; 28a", 28b'') est toujours positionnable de telle manière par rapport à une ouverture de sortie de poudre (19a', 19b') d'une chambre à poudre (16a', 16b') qu'il passe sur une couche de poudre de matière première déposée sur le support (12) depuis l'ouverture de sortie de poudre (19a', 19b') pour la lisser, lorsque le dispositif d'application de poudre (10') fonctionne et qu'il est déplacé dans des directions opposées pour effectuer un mouvement de va-et-vient au-dessus du support (12) de l'installation de fabrication de pièces usinées par revêtement par couches de poudre à l'aide d'un rayonnement électromagnétique ou d'un rayonnement de particules.

9. Dispositif d'application de poudre sur un support selon la revendication 7 ou 8, **caractérisé en ce qu'**un coulisseau de lissage (28' ; 28a' à 28d' ; 28" ; 28a", 28b'') déplaçable horizontalement et/ou verticalement est couplé à un dispositif qui sert à commander la délivrance de la poudre par une ouverture de sortie de poudre (19a à 19d ; 19a', 19b') d'une chambre à poudre (16a à 16d ; 16a', 16b') et ferme ou libère l'ouverture de sortie de poudre (19a' 19b') de la chambre à poudre (16a' 16b') en fonction de la position occupée par le coulisseau de lissage (28' ; 28a' à 28d' ; 28" ; 28a", 28b").

10. Installation de fabrication de pièces usinées par revêtement par couches de poudre à l'aide d'un rayonnement électromagnétique ou d'un rayonnement de particules, comprenant :
- un équipement de rayonnement pour le revêtement sélectif, à l'aide d'un rayonnement électromagnétique ou d'un rayonnement de particules, d'une couche de poudre de matière première (20) appliquée sur un support (12),
**caractérisée par** un dispositif d'application de poudre sur un support (10, 10') selon l'une des revendications 1 à 9.
